(19) **Europäisches Patentamt / European Patent Office / Office européen des brevets**

(11) **EP 3 261 476 B1**

(12) # EUROPEAN PATENT SPECIFICATION

(45) Date of publication and mention of the grant of the patent:
**09.01.2019 Bulletin 2019/02**

(21) Application number: **16715874.0**

(22) Date of filing: **19.02.2016**

(51) Int Cl.:
*A43B 7/00* (2006.01)    *A43B 7/34* (2006.01)
*C09K 5/06* (2006.01)    *C08J 9/00* (2006.01)
*F28D 20/02* (2006.01)

(86) International application number:
**PCT/IB2016/050898**

(87) International publication number:
**WO 2016/135601 (01.09.2016 Gazette 2016/35)**

(54) **A SHOE WITH IMPROVED THERMAL COMFORT**

SCHUH MIT VERBESSERTEM THERMISCHEM KOMFORT

CHAUSSURE À CONFORT THERMIQUE AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2015 IT RM20150079**

(43) Date of publication of application:
**03.01.2018 Bulletin 2018/01**

(73) Proprietor: **Miriade S.p.A.**
**80035 Nola (IT)**

(72) Inventors:
• **GALIANO, Gregorio**
**80035 Nola (IT)**

• **CARLINO, Raffaele**
**80035 Nola (IT)**

(74) Representative: **Leone, Mario et al**
**Cantaluppi & Partners S.r.l.**
**Viale della Tecnica, 205**
**00144 Roma (IT)**

(56) References cited:
**EP-A1- 2 599 399    WO-A1-2005/020735**
**US-A- 5 499 460    US-B1- 6 319 599**
**US-B1- 6 892 478**

**Description**

The present invention relates to a shoe with improved thermal comfort, particularly a shoe or a boot, generally comprising an upper and a sole joined therebetween and a plantar sole arranged in an inner department of the upper destined to received a foot; the upper has a front toe-end, a rear counter and a quarter with an inner lining made of reinforcement cloth; the sole has a resting front portion and a heel.

Such shoe is equipped with microcapsules including a material changing phase from liquid to solid and viceversa at predetermined temperatures. The purpose of the microcapsules is to make the foot to remain in an environment at constant temperature substantially corresponding to the phase change temperature, until such change has occurred completely, that is for a certain period of time, even when the outer temperature changes abruptly.

These shoes are devised above all for cold climates where, passing from a normally heated environment outside, the foot would risk to be subjected to a thermal shock.

Under phase change materials (PCM) materials accumulating latent heat are meant, which exploit the phenomenon of the phase transition to absorb the incoming energy flows, so as to store a high quantity of energy, by keeping constant their own temperature. The PCMs are solid at lower temperature than the transition one, when it rises and exceeds a determined threshold, which varies depending upon the material, they liquefy by accumulating heat (liquefaction latent) which is removed from the body overheated by the physical activity. In the same way, when the temperature decreases, the material solidifies and releases heat (solidification latent).

These thermo-regulating materials represent a new technological solution in planning technical clothing and shoes, as they are an interesting system for mitigating the fluctuations of the environment temperature through the reduction in the inner temperature peaks, and then in the energy consumption used by the human body to keep a well-being thermal condition.

The requirements that a PCM must have to be used in the clothing and in the shoe manufacture are:

- melting temperature and freezing temperature compatible with the human well-being;
- high phase transition heat (liquefaction/solidification) ;
- absence of toxicity, corrosion and hygroscopicity.

Currently, the most experimented PCMs for the use in the technical clothing, having such features, are the paraffinic organic compounds and hydrocarbons obtainable as by-products of the oil refining or by polymerization. Such materials are used with containment systems and the most used ones are the macro and micro encapsulation. In the present invention, the microcapsules are particularly interesting, as they can be easily mixed with foams or resins, and they can be even used to impregnate porous tissues or materials.

In the state of art several documents are known describing the use of such microcapsules in combination with shoes. Generally, they are present in shoes and sport boots or however with high performances which, however, do not improve the shoe's appearance.

To this purpose, an example of use of microcapsules in the shoe field is known by the US patent Nr. 5, 499, 460, relating to a sole enriched with microcapsules;

International patent application Nr. 1998/46669 (Gateway Technologies Inc.) of 1998, relating to a foam containing microcapsules; or the US patent Nr. 6,660,667 of 2003, relating to a composition containing microcapsules for tissue coatings.

The US patent Nr. 6,892,478, instead, describes a shoe with a particular sole in the front portion thereof a phase change material is provided; the shoe is of the type comprising a sole with an insole and an upper with tongue: the insole includes a first polymeric material with first phase transition microcapsules, whereas the upper includes a second polymeric material with second phase transition microcapsules, wherein the two types of microcapsules have different transition temperatures.

The International patent application Nr. 2011/027015 describes an application of phase change microcapsules to shoes and the International patent application Nr. WO 2005/020735 relates to modifications to be made to a woman's shoe with a layer of thermo-adjusting in an insole made of laminar material, with a filler constituted by phase change particles.

However, these shoe examples fail in coupling determined aesthetical features, therefor it is requested not to upset the conventional shape of the shoe itself, with a real comfort when, once worn, they are subjected to strong thermal shocks, for example from a winter climate, with temperatures well below 0°C, to an overheated inner environment, as it often happens in the cold regions and in the mountain.

A key factor providing an acceptable comfort is the transition duration, but even the perfect adherence between the shoe's elements and the foot, so that the latter can enjoy the transition temperatures which are always kept in an acceptable range of temperatures.

The object of the present invention is to provide a shoe allowing to overcome the drawbacks mentioned with reference to the known art.

Such object is reached by a shoe as specified above, wherein an insole has, at its front side, an open portion corresponding to a reservoir formed in the thickness of the said front portion of the sole, and wherein:

- the upper, at the rear counter and the front toe-end, has a layer of memory foam including phase change microcapsules;
- the inner lining and the small sole are impregnated with phase change microcapsules;
- the above-mentioned reservoir is filled up with phase change microcapsules,

said phase change microcapsules having a solidification temperature comprised between 18° and 23°C and a melting temperature comprised between 24°C and 32°C.

The shoe with improved thermal comfort as previously defined guarantees an effective keeping of the comfort temperature for a a long period, by providing to the foot the best possible condition in each site thereof, both upon passing from hot to cold and viceversa.

The present invention will be described by pure way of example and not for limitative purpose by referring to the enclosed drawings wherein:

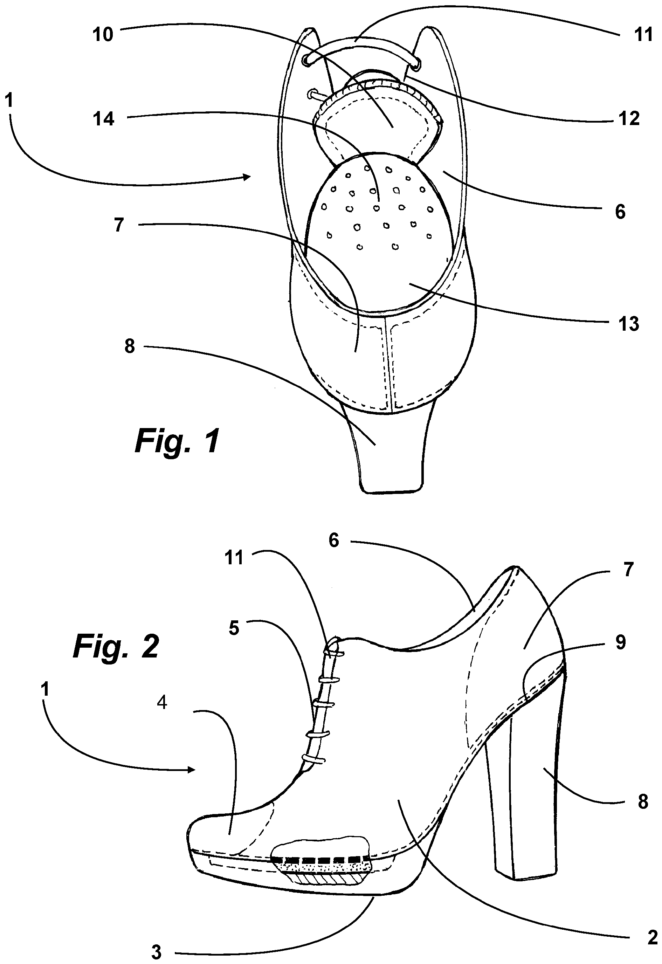

- figure 1 shows a top view of a shoe according to the invention;
- figure 2 shows a side view of the shoe of figure 1, in partial section;

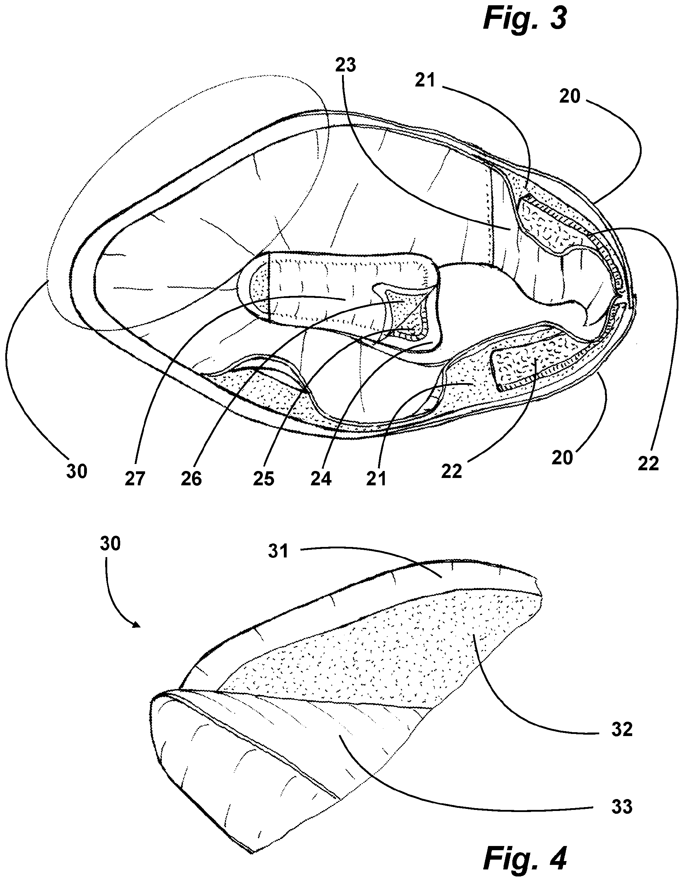

- figure 3 shows a section view of the shoe of figure 1, illustrating the inside thereof;
- figure 4 shows a detailed and enlarged view of a detail in figure 3; and
- figures 5, 6 and 7 illustrate, by means of perspective views, the sole assembly.

By referring to the above defined shoe, under memory foam generally polyurethanes with the addition of chemical products are meant, which increase the viscosity and density thereof. They are often defined as foamed viscoelastic polyurethane material, or lo resilience polyurethane foam (LRPu). The high-density memory foam rubber softens as reaction to the body heat, thus allowing to mould to the body in few minutes. A low-density memory foam is sensitive to the pressure and it adapts quickly to the body shape by pressing thereagainst, returning to the original shape thereof once the pressure is removed.

The upper generally is made of leather obtained from the skin of animals which, after a tanning process, is made rot-proof. The leather, in the current language also called skins or hides, has very high resistance and above all hygienic features which make it particularly suitable to the production of shoes, favouring transpiration and then avoiding the development of fungi, moulds and other skin and foot pathologies produced by the humidity stagnation inside the shoe. The particular leather structure, constituted by a three-dimensional interlacement of collagen fibres, makes that the leather has even thermo-insulating properties, particularly useful in the winter season.

Apart from the leather of animal origin, there are alternative materials which imitate the leather, similar from the visual point of view, which however have not the other functional and behaviour features which are due to the particular structure of the real leather.

By referring to the figures the shoe, designated as a whole with 1, can be hand-made.

It comprises an upper 2 and a sole 3 joined therebetween. The inside of the shoe 1 receives a insole 13 arranged in a department inside the upper 2, destined to receive a foot.

The upper 2 has a front toe-end 4, a rear counter 7 and a quarter 6 with an inner lining made of reinforcing cloth. The sole 3 instead has a front resting portion and a heel 8, connected to a rear portion 9 of the sole 3 corresponding to the calcaneus.

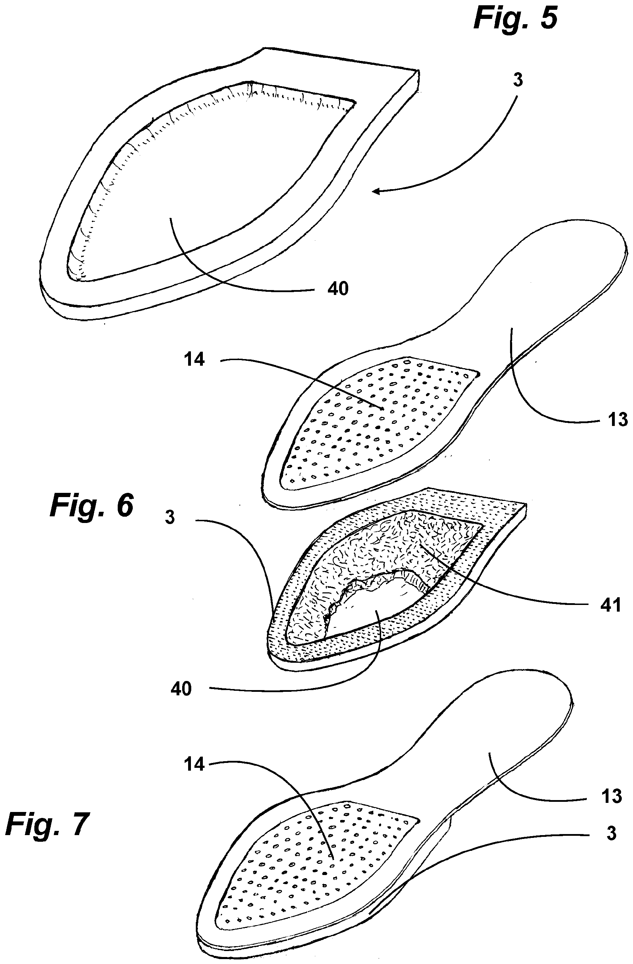

The insole 13 on the front side has a hole 14 at said front portion of the sole 3, in the thickness thereof a reservoir 40 is obtained filled up with a layer 41 of phase change microcapsules (figure 6).

The upper 2, at the rear counter 7 and the front toe-end 4, has a layer 22 of memory foam including, in an appropriate mixture, phase change microcapsules of the same type of the layer 41.

In particular, the counter 7 has an outer layer 20 and an inner lining 23 therebetween said foam layer 22 is inserted, and furthermore the faces 21 of the outer layer 20 facing towards the foam are painted too with a layer of resin impregnated with microcapsules.

The shoe 1 comprises even strings 11 and a tongue 10 provided too with a composite structure: it comprises an outer layer 27 painted inside with an inner deposition 26 of microcapsules, with a foam layer 25 rested on a lining 24.

Furthermore, the thickness 30 of the upper 2 comprises an outer layer 31, by way of example made of leather, and a lining 33, with a layer 32 of microcapsules inserted therebetween.

Even the insole 13, particularly the rear portion thereof, is impregnated with phase change microcapsules.

As previously said, the phase change microcapsules have a solidification temperature comprised between 18° and 23°C and a melting temperature comprised between 24°C and 32°C.

**Example - Materials and methods**

**Implementation of the insert made of tissue charged with phase change microcapsules (microPCMs)**

Cloth support made of percale cotton:

```
sizes = 205 ± 1 mm x 435 ± 1 mm x 0.20 ± 0.01 mm;
```

weight 11.95 ± 0.01 g.
Bonding agent used to fix the microPCMs to the percale cotton:

CRLEM RP6005, acrylic resin with high content of dry fraction = 60%,
dilution ratio 15 mg of acrylic in 100 g of distilled water.

Phase change microcapsules (microPCMs):

microPCMs Microtek Laboratories, Inc. "MPCM 28D" (D: dry powder);
melting point 28°C;
solidification point 18°C;
material contained in the microcapsule: n-Octadecanep Percentage of microPCMs dispersed in the acrylic bonding agent 300% by weight with respect to the dry fraction of the bonding agent.

**Preparation of insert made of tissue.**

On the support made of percale cloth (100% cotton), weighing 11.95 ± 0.01 g, by means of a paint gun with compressed air, 150 g of solution (based upon ACRILEM RP6005 acrylic dispersion) was sprayed.
The solution was distributed, in several passages (2 for each side), on both the cloth surfaces. The solution has the following composition:

| | | | |
|---|---|---|---|
| Binding agent (ACRILEM RP 6005) | | 15.02 ± 0.01 | g |
| Dry residue of the binding agent | 60% | 9.01 ± 0.01 | g |
| Capsules with respect to the dry residue of the binding agent | 300% | 27.11 ± 0.01 | g |
| Distilled water | | 100.22 ± 0.01 | g |
| Mixture Total | | 151.36 | g |

After each passage of acrylic solution, the treated cloth was placed in a stove for about 10 min at 140°C to make the treatment process to take place.
After the spraying process the final weight of the treated tissue resulted to be 30.85 ± 0.01 g, about 7 and a thickness of 0.500 ± 0.01 mm.
From the treated tissue, by using sample small cardboards used to cut the upper, two inserts were obtained, having a surface of about 113 and 202 cm$^2$, respectively, with a thickness of about 0.500 ± 0.01 mm.
The inserts were positioned between the lining and the upper of a shoe prototype.

**Application on the upper and lining surface of charge with Phase change microcapsules (microPCMs).**

Leather for upper: calf tassel (Foster), vegetable tanning.
Leather for lining: chrome-tanned lamb.
Finishing solution charged with microPCMs:

• Compact Baygen AP2: preparation of polyurethanes and acrylic dispersion with auxiliaries, used for improving the leather grain.

• Baysin LN: Auxiliary agent for controlling the viscosity of the water-based solutions used in the leather finishing process.

- Bayderm primer APRI: Polyurethane solution used in the leather finishing process.

- Dilution water.

- microPCMs MPCM 28D.

**Preparation of the leather, used for implementing the upper and the lining with the addition of microPCMs**

The addition of the leather, used for implementing the upper and the lining with microPCMs MPCM 28D, was implemented by means of a *coating* process by roller coating.

The dispersion containing the microPCMs applied onto the leather has the following composition:

| Coating solution composition | Weight (g) | % |
|---|---|---|
| microPCMs MPCM 28D | 10.00 | 4 |
| Compact Bayge AP2 | 100.00 | 47 |
| Dilution water | 50.00 | 23 |
| Baysin LN | 50.00 | 23 |
| Bayderm primer APV | 15.00 | 7 |

The thickness of the film deposited, by means of a coating process by coating, on the surface of the leather for upper and lining is about 0.08 ± 0.01 mm, whereas the thickness of the two types of leather is about 0.54 ± 0.01 mm.

From the leather with the addition of microPCMs, the panels for the upper and the lining were implemented.

**Creation of the reservoir of microPCMs in the plateau of the shoe prototype**

From the plateau in EVA with initial weight of about 53.01 g, about 12.44 g of polymer were removed so as to obtain a cavity wherein one could pour the mixture of glue and microPCMs. In the plateau wherein the cavity was obtained (plateau final weight 40.57 g) about 34g of latex-based glue, charged with 49.89% of microPCMs, were poured in two applications. After each application the mixture was left to dry for 24 hours.

The quantity of microPCMs to be incorporated in the glue was determined with respect to the dry fraction of adhesive (60%), so as to have a concentration of 300% with respect to the dry fraction of adhesive.

The final weight of the Plateau, once the mixture was made to dry, resulted to be about 63.27g.

The mixture was prepared according to the following method:

| First application of PCMs to the Plateau | | |
|---|---|---|
| | Fraction (%) | Weight (g) |
| Glue+PCM | | 15.00 |
| Codex 1100 Glue (latex in aqueous dispersion) | | 5.36 |
| Glue Dry Residue | 60 | 3.21 |
| MicroPCMs (with respect to the glue dry residue) | 300 | 9,64 |
| Water:Glue = 1:1 | | 5.36 |
| Mixture Total | | 20.36 |
| Second application of PCM to the Plateau | | |
| | Fraction (%) | Weight (g) |
| Glue+PCM | | 10.00 g |
| Codex 1100 Glue (latex in aqueous dispersion) | | 3.57 |
| Dry Residue | 60 | 2.14 |
| microPCMs (with respect to the glue dry residue) | 300 | 6.43 |

(continued)

| Second application of PCM to the Plateau | | |
|---|---|---|
| | Fraction (%) | Weight (g) |
| Water: Glue = 1:1 | | 3.57 |
| Mixture Total | | 13.57 |

The memory foam inserts were obtained from a plate of 30 x 30 cm made of open-cell visco-elastic foam supplied by NTT Next Technology Tecnotessile of Prato (Italy).

The foam is constituted by water foamed polyurethane. As support for the foam, a cloth made of polyester was used.

The foam, in the preparation phase, was charged with 30% by weight of microPCMs.

In order to improve the wearing comfort of the prototype the following inserts were implemented:

Footbed having weight of 6 g, having a surface of about 104 cm$^2$ and a thickness varying from 1 mm in the tip region up to 4 mm in the calcaneum region.

Insert for the counter having weight of 5 g, with a surface of 75 cm$^2$.

**Upper assembly**

The upper portion of the shoe was implemented by placing the tissue impregnated with microPCMs between the lining and the upper. The impregnated tissue replaces the reinforcing cloth usually used in the shoes as support. Without the supporting cloth it would not be possible to assemble the leather panels on on the mould pattern, since the leather would result to be too weak and it could tear.

Furthermore, between a lining and the upper the counter for the calcaneus (made of compressed cardboard) was placed, whereon the memory foam insert was previously applied, with an adhesive of polychloroprene (i.e. Neoprene®) nature.

A memory foam insert was placed even in the tongue of the shoe resting upon the instep girth. The insert was applied with the same adhesive used previously for the fastening on the counter.

Once assembled the panels of the lining and the upper with the tissue impregnated with the MicroPCMs and the memory foam inserts, the whole set was positioned on the mould pattern.

The multilayer constituted by the panels of the lining and the upper, the impregnated tissue and the inserts, was shaped both on the mould and fastened to the sole by means of polychloroprene adhesive and shoe repairer's small rivets.

On the sole holes were implemented in advance with diameter of about 1 mm in order to favour the thermal exchange between the foot and the tank of microPCMs placed into the plateau.

Above the insole, the Footbed, obtained from the memory foam polyurethane, was placed. In order to avoid the direct contact between the foam and the foot, on the Footbed a cleaning underbed, obtained from the same leather used for the lining, was placed and fastened with the polychloroprene glue. Even in this case, in order to favour the thermal exchange between foot and the reservoir of microPCMs existing in the plateau, both on the cleaning small sole and on the Footbed, holes having diameter of about 3 mm were implemented.

The plateau was fastened to the structure placed onto the mould pattern below the small sole with polychloroprene adhesive.

The plateau, once fastened to the upper, was coated with the same leather used for the upper.

One then provided to fasten the sole made of leather.

At last the heel was implemented and fastened. Even the heel was coated with the leather used to implement the panels for the upper.

**Characterization of the thermal properties of the second shoe prototype**

The characterization test of the thermal properties of the shoe prototype of the red *"francesina"* type was performed with the help of thermocouples of K type and a PC Pico Log TC-08 interface card.

The test was performed with the collaboration of a model, by positioning four thermocouples, two for each shoe type, in the region of metatarsus and plantar arch. The model wore at the same time both shoes (prototype shoe and comparison shoe) for a period of time not lower than 60 min.

The test result demonstrated that the foot wearing the shoe prototype has a temperature lower by about 2°C with respect to the foot wearing the shoe prototype as such. Therefore, one proceeded with testing the thermo-adjusting properties of the prototype under extreme conditions.

The test was performed by placing both the prototype and comparison shoe in a stove at SO °C for two hours and subsequently in freezer at - 20°C for further two hours. Even in this case four thermocouples were positioned, two for each type of shoe, in the region of metatarsus and plantar arch. The test procedure was repeated at intervals of 50 minutes for a total of 4 hours.

The test result demonstrated that the shoe prototype in the tip region shows a temperature lower by about 10°C than the shoe as such in the heating phase, and a temperature lower by about 20°C in the cooling phase.

Furthermore, the test demonstrated that the shoe prototype, in the region between plantar arch and upper, shows a temperature lower by about 7.5°C than the shoe as such in the heating phase, and a temperature lower by about 13°C in the cooling phase.

**Characterization of the properties of memory foam inserts inserted in the shoe prototype**

The test for characterizing the properties of the memory foam inserts existing in the shoe prototype was performed by taking into consideration four different types of shoes: black décolleté made of chamois (size 38), black décolleté made of patent leather (size 38), red *francesina* Prototype (size 37), red *francesina* As Such (size 37).

The measurements were performed by taking into consideration two different models (1- height: 175 cm, weight: 64 kg, size 38; 2- height: 158 cm, weight: 54 kg, size: 37), properly calibrated force sensors (i.e. *Flexiforce*® sensors by Tekscan®) and a suitable data acquisition system.

The tests were performed under condition of bipedal rest (both feet on the ground) and during the phase of detaching the heel from the ground.

The décolleté shoes were mainly used to validate the approach and the experimental set-up.

The results obtained for the two different types of black décolleté shoe, both worn by the first model, are shown in the following table, in terms of maximum value of pressure, measured in different anatomic regions, in case of bipedal rest and during the detachment phase.

The performed measurements showed differences in terms of maximum pressure for the two types of *francesina*. Particularly, the maximum values of pressure evaluated for the "Prototype Shoe" in specific positions would seem to be clearly higher than those obtained for the "As Such Shoe". Such results suggest a better interaction and transfer of the charge to the foot-shoe interface above all in determined anatomic regions, thus by highlighting the "biofunctional" aspect of the "Prototype Shoe".

The results obtained from the performed measurements and shown in the single tables can be taken into consideration only in comparative terms, since, however, they are strictly connected to the type of the considered user, that is each one characterized by a determined posture, by specific anatomical features and by a particular pace mechanism evident in the detachment phase.

To the above described shoe with improved thermal comfort a person skilled in the art, with the purpose of satisfying additional and contingent needs, could bring several additional modifications and variants, all however comprised within the protection scope of the present invention, as defined by the enclosed claims.

**Claims**

1. A shoe (1) with improved thermal comfort, particularly a shoe or a boot, comprising an upper (2) and a sole (3) joined therebetween and an insole (13) arranged in a compartment inside the upper (2), configured to receive a foot, the upper (2) having a front toe-end (4), a rear counter (7) and a quarter (6) with an inner lining (23) made of reinforcing cloth, the sole (3) having a resting front portion and a heel (8), wherein the insole (13) has, at its front side, an open portion corresponding to a reservoir (40) formed in the thickness of the said front portion of the sole (3), wherein

   • the upper (2), at the rear counter and the front toe-end (4), has a layer of memory foam including phase change microcapsules;
   • the inner lining (23) and the insole (13) are impregnated with phase change microcapsules;
   • the above-mentioned reservoir (40) is filled up with phase change microcapsules, and wherein said phase change microcapsules have a solidification temperature between 18° and 23°C and a melting temperature between 24°C and 32°C.

**Patentansprüche**

1. Schuh (1) mit verbessertem Wärmekomfort, insbesondere ein Schuh oder ein Stiefel, aufweisend einen Schaft (2) und eine dazwischen gefügte Sohle (3) und eine Einlage (13), die in einem Fach innerhalb des Schafts (2) angeordnet ist, ausgebildet zur Aufnahme eines Fußes, wobei der Schaft (2) ein vorderes Zehen-Ende (4), eine hintere Kappe (7) und ein Viertel (6) mit einem Innenfutter (23) aus einem Verstärkungsstoff aufweist, wobei die Sohle (3) einen aufliegenden Vorderabschnitt und einen Absatz (8) aufweist, wobei die Einlage (13) an ihrer Vorderseite einen offenen Abschnitt aufweist, der zu einem Reservoir (40) korrespondiert, welches in der Dicke des Vorderabschnitts von der Sohle (3) geformt ist, wobei

   • der Schaft (2) an der hinteren Kappe und dem vorderen Zehen-Ende (4) eine Schicht aus Gedächtnisschaum beinhaltend Phasenwechsel-Mikrokapseln aufweist;
   • das Innenfutter (23) und die Einlage (7) mit Phasenwechsel-Mikrokapseln imprägniert sind;
   • das vorgenannte Reservoir (40) mit Phasenwechsel-Mikrokapseln gefüllt ist; und wobei die Phasenwechsel-Mikrokapseln eine Verfestigungstemperatur zwischen 18°C und 23°C und eine Schmelztemperatur zwischen 24°C und 32°C haben.

**Revendications**

1. Chaussure (1) à confort thermique amélioré, en particulier, chaussure ou botte comprenant une tige (2) et une semelle (3) assemblées entre elles et une semelle intérieure (13) agencée dans un compartiment à l'intérieur de la tige (2), configurée pour recevoir un pied, la tige (2) ayant une extrémité d'orteils avant (4), un contrefort arrière (7) et un quartier (6) comportant un revêtement intérieur (23) constitué de tissu de renforcement, la semelle (3) ayant une partie avant d'appui et un talon (8), dans laquelle la semelle intérieure (13) a, au niveau de son côté avant, une partie ouverte correspondant à un réservoir (40) formé dans l'épaisseur de ladite partie avant de la semelle (3), dans laquelle

   * la tige (2), au niveau du contrefort arrière et de l'extrémité d'orteils avant (4) a une couche de mousse à mémoire de forme incluant des microcapsules à changement de phase ;
   * le revêtement intérieur (23) et la semelle intérieure (13) sont imprégnés de microcapsules à changement de phase ;
   * le réservoir (40) mentionné ci-dessus est rempli de microcapsules à changement de phase,

   et
   dans laquelle lesdites microcapsules à changement de phase ont une température de solidification entre 18 °C et 23 °C et une température de fusion entre 24 °C et 32 °C.

*Fig. 1*

*Fig. 2*

*Fig. 3*

*Fig. 4*

**Fig. 5**

3

40

**Fig. 6**

14

3

41

40

13

**Fig. 7**

14

13

3

**EP 3 261 476 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5499460 A
- US 199846669 B
- US 6660667 B
- US 6892478 B
- WO 2011027015 A
- WO 2005020735 A